Europäisches Patentamt

(19) European Patent Office

Office européen des brevets

(11) Numéro de publication: **0 116 482**
**B1**

(12) **FASCICULE DE BREVET EUROPÉEN**  –

(45) Date de publication du fascicule du brevet:
03.09.86

(21) Numéro de dépôt: **84400011.7**

(22) Date de dépôt: **04.01.84**

(51) Int. Cl.⁴: **H 02 J 7/16,** H 02 J 7/24

(54) **Régulateur de tension à maintien de phase et protection contre les courts-circuits d'excitation d'alternateur.**

(30) Priorité: **05.01.83 FR 8300074**

(43) Date de publication de la demande:
**22.08.84 Bulletin 84/34**

(45) Mention de la délivrance du brevet:
**03.09.86 Bulletin 86/36**

(84) Etats contractants désignés:
**DE FR IT**

(56) Documents cité:
**FR-A-1 560 957**
**FR-A-2 390 656**
**FR-A-2 468 940**
**US-A-4 346 337**
**US-H-939 015**

(73) Titulaire: **EQUIPEMENTS AUTOMOBILES
MARCHAL, 26, rue Guynemer, F-92132 Issy- les-
Moulineaux (FR)**

(72) Inventeur: **Calvo, Casimir, 42, Boulevard des
Minimes, F-31200 Toulouse (FR)**

(74) Mandataire: **Peuscet, Jacques, 3, Square de
Maubeuge, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des régulateurs de tension, destines à reguler la tension delivrée par les générateurs de courant électrique qui alimentent notamment les circuits électriques de vehicules automobiles, et se rapporte plus précisément aux regulateurs de la tension delivrée par les générateurs de courant alternatif ou alternateurs, du type de ceux qui équipent en particulier les poids lourds.

On sait que les alternateurs comprennent un rotor ou inducteur, qui est entraîné, par le moteur du vehicule, en rotation à l'interieur d'un stator, ou induit, constitué d'au moins une bobine de fil conducteur dans laquelle se crée un courant alternatif induit. Le rotor comprend un noyau magnétique, en général cylindrique, autour duquel est montée la bobine inductrice qui reçoit elle-même une énergie d'excitation, son alimentation s'effectuant au moyen d'un collecteur comportant des bagues qui cooperent à glissement avec des charbons conducteurs.

Les alternateurs montés sur les véhicules automobiles, et en particulier les poids lourds, sont généralement triphases et leur stator comprend trois bobines d'induit tranchés en Y, dont les extrémites non communes sont reliées, pour chacune des trois bobines, a un point situé entre deux diodes orientées dans le même sens de l'une des trois branches d'un pont de diodes principal D1, à six diodes, dont les deux bornes de sortie constituent l'une la borne ( + ) d'alimentation en courant continu du circuit electrique du véhicule, et en particulier de la batterie afin que cette dernière soit rechargée, et l'autre la borne (-), mise à la masse.

En outre, les bobines d'induit sont raccordées à un pont de diodes auxiliaire D2, dont une borne de sortie est egalement à la masse et dont l'autre borne de sortie constitue une borne auxiliaire, qui est raccordée à la batterie par la fermeture du contacteur d'allumage du moteur du véhicule.

Enfin, l'alternateur comporte une borne de phase fournissant la tension non redressée.

Afin de maintenir la tension délivrée au circuit d'utilisation à l'interieur d'une plage déterminée, il est bien connu d'utiliser un regulateur de tension, qui est un dispositif destiné à maintenir une tension de charge sensiblement constante pour une plage de variations de la tension d'entrée, car les variations de la tension non régulée seraient supérieures à ce que peuvent supporter les équipements électriques auxquels cette tension est transmise.

On connaît déjà un régulateur de la tension délivrée par un alternateur à bobine excitatrice, quelles que soient les conditions de charge et de vitesse de rotation du rotor de l'alternateur, qui comprend, d'une part, un générateur de tension de référence, délivrant une première tension de régulation, et, d'autre part, un premier circuit de détection de tension, qui compare à la première tension de régulation la tension mesurée entre la borne ( + ) et la borne (-) à la sortie du redresseur principal, bornes ( + ) et (-) auxquelles le régulateur est raccordé respectivement par une première et une seconde entrée; si la tension mesurée est inférieure à la première tension de régulation, le régulateur est conducteur et alimente la bobine encitatrice, qui lui est raccordée par une troisième et une quatrième entrées; le régulateur est également raccordé par sa quatrieme entrée à la borne auxiliaire constituant la sortie du redresseur auxiliaire. Dans un tel régulateur connu, dit "quatre fils", une lampe témoin est branchée entre les fils de raccordement de la borne ( + ) et la borne auxiliaire aux entrées correspondantes du régulateur.

Quand on ouvre l'interrupteur du circuit électrique d'un véhicule équipé d'un alternateur et d'un tel régulateur, afin de mettre hors-circuit des charges autres que la batterie, l'allure des signaux aux bornes de l'alternateur est représentée sur la figure 0 des dessins annexés. La variation du courant délivré par l'alternateur vers les charges tend à provoquer une surtension qui correspond à une augmentation de la tension à la borne positive de l'alternateur, cette tension étant désignée par V + alt sur la figure 0. Cette surtension pourrait avoir une valeur de crête importante (par exemple de 150 V alors que l'alternateur est conçu et réglé pour délivrer une tension de 28 V destinée notamment à charger une batterie de 24 V, dans le cas d'un poids-lourd) sur les bornes ( + ) et auxiliaire de l'alternateur, si la batterie n'était pas connectée. Mais, du fait de sa présence, la batterie joue le rôle d'un accumulatuer d'énergie électrique, qui absorbe l'énergie libérée par la surtension virtuelle. En conséquence, la tension aux bornes de la batterie est égale à V + alt (V batterie = V + alt), et la surtension réelle est limitée à une valeur maximale bien plus faible (de 32 V environ, dans l'exemple précedent) atteinte à l'instant $t_1$ postérieur à l'ouverture de l'interrupteur à l'instant $t_0$. Puis la tension sur la borne ( + ), V + alt diminue lentement jusqu'à reprendre sa valeur initiale (28 V dans l'exemple) à un instant $t_2$, postérieur de 15 à 20 s à l'instant $t_1$, du fait que la batterie libère progressivement, pendant le temps $\Delta t = t_2 - t_1$, l'énergie qu'elle a accumulée.

Les variations de $V_{ph}$ = amplitude dé la crête des signaux alternatifs de phase, et de la tension V + aux. à la borne ( + ) auxiliaire sont également représentées sur cette fig. 0.

Par conception, le régulateur "quatre fils" ne peut alimenter la bobine excitatrice que si la tension mesurée sur la borne ( + ) est inférieure à la tension de régulation (28 V dans cet exémple). Mais comme, à partir de l'instant $t_0$ du délestage, la tension mesurée sur la borne ( + ) devient supérieure a la tension de régulation, le régulateur n'est pas conducteur jusqu'à l'instant $t_2$, et coupe donc l'alimentation de la bobine excitatrice jusqu'à cet instant.

Il en résulte que l'amplitude de crête $V_{ph}$ des signaux alternatifs de tension de phase de l'alternateur va tout d'abord passer par un maximum (32 V) à l'instant $t_1$ en raison de la surtension, puis va diminuer rapidement par décharge de l'énergie accumulée dans la bobine excitatrice, jusqu'à atteindre une tension minimum, Vmini qui dépend des conditions de fonctionnement de l'alternateur à l'instant $t_0$ du délestage, et en particulier de la vitesse de rotation et du courant rémanent de l'alternateur.

Durant toute la surtension, le régulateur est bloqué, le potentiel de la borne auxiliaire est égal à celui de la borne ( + ), et la lampe-témoin branchée entre les fils de raccordement à ces bornes est éteinte. Le régulateur redevient conducteur après l'instant $t_2$, lorsque la tension mesurée sur la borne ( + ) redevient inférieure à la tension de régulation (28 V par exemple). Le courant qui traverse la bobine excitatrice ne dépend alors que de la résistance de la lampe-témoin, car l'alternateur est désexcité, ce qui se traduit par le fait que le signal de phase est inférieur à la tension détectée sur la borne auxiliaire. Il se produit donc, quand le régulateur reconnecte la bobine excitatrice, une chute de potentiel aux bornes de la lampe-témoin, qui s'allume un court instant, jusqu'au moment où la tension de phase et celle détectée sur la borne auxiliaire retrouvent leur valeur normale (de 28 V cet exemple).

De plus, pendent la majeure partie du temps $\Delta t = t_2 - t_1$, la tension de phase est sensiblement nulle, de sorte que les compte-tours qui sont branchés sur la borne de phase, comme cela est le cas pour la majorité des véhicules équipés de moteurs disel, ne sont plus en mesure d'afficher correctement le régime de rotation du moteur, ce que constitue un inconvénient majeure des régulateurs "quatre fils".

Par la présente invention, on se propose de remédier à cet inconvénient, et l'invention a pour but de réaliser un régulateur qui permet de maintenir le signal de phase lors des délestage de charge, de sorte que ce signal de phase puisse être utilisé d'une manière continue pour commander un compte-tours électronique sur les véhicules à moteur diesel.

On connaît, par ailleurs, d'après US-H-939 015, un type de régulateur de la tension délivrée par un alternateur à une bobine excitatrice, ledit alternateur comportant, d'une part un redresseur principal, qui est alimenté par les bobines d'induit et est raccordé aux bornes principales positive et négative de l'alternateur, d'autre part un redresseur auxiliaire, qui est alimenté par les bobines d'induit et est raccordé à la borne négative précitée et à une borne auxiliaire, ledit régulateur étant raccordé, d'une part aux bornes principales de l'alternateur respectivement par une première et une seconde entrée, d'autre part à la bobine excitatrice par une troisième et une quatrième entrée et enfin à la borne auxiliaire par une entrée directement reliée à la quatrième entrée précitée.

Un régulateur du type de celui montré par US-H-939 015 comprend, en outre:
- un générateur de tension de référence, délivrant une première tension de regulation,
- un premier circuit de détection, qui compare à la première tension de régulation la tension mesurée entre, d'une part la borne positive principale, d'autre part la borne négative,
- un générateur de tension de reference qui delivre une seconde tension de régulation,
- un dispositif suiveur de tension, grâce auquel la tension sur la borne auxiliaire suit la valeur crête de la tension alternative de la phase de l'alternateur,
- un second circuit de détection de tension comparant la tension détectée sur la borne auxiliaire à la seconde tension de régulation,
- un commutateur à transistor, commandant l'alimentation de la bobine excitatrice,
- un circuit logique ayant pour entrées les sorties des deux circuits de détection de tension et commandant les états conducteurs et non-conducteurs du commutateur.

Le régulateur conforme à US-H-939 015 assure, par le commutateur à transistor, l'alimentation de la bobine excitatrice lorsque les deux tensions mesurées sont simultanément inférieures à leur tension de régulation respective, ce qui ne permet pas de remédier aux inconvénients évoqués précédemment et que l'invention vise à supprimer ou tout au moins à réduire.

Selon l'invention, un régulateur de la tension délivrée par un alternateur à une bobine excitatrice du type défini ci-dessus, est caractérisé par le fait qu'il alimente la bobine excitatrice si au moins l'une des deux tensions mesurée est inférieure à sa tension de régulation respective, et que la bobine est désexcitée dans le cas où les deux tensions mesurées sont supérieures à leurs tensions de régulation respectives et en ce que la seconde tension de régulation est légèrement inférieure à la première.

Avantageusement, le régulateur comprend un circuit de détection de surintensité qui mesure l'intensité du courant traversant la bobine excitatrice, lorsque le commutateur conduit, et la compare à un seuil d'intensité, afin de commander, dès que l'intensité mesurée est supérieure au seuil d'intensité, une diminution des première et seconde tensions de régulation, de sorte que le commutateur passe à l'état nonconducteur; dans ce cas, le circuit de détection de surintensité est relié à la quatrième entrée raccordée directement à la borne auxiliaire et détermine le seuil d'intensité par le rapport de la tension détectée sur la borne auxiliaire à la résistance minimum de la bobine excitatrice.

Les circuits de détection peuvent comprendre deux comparateurs à sortie collecteur ouvert et qui sont branchés en parallèle sur la base d'un transistor, le collecteur dudit transistor étant alimenté par deux résistances, dont l'une, reliée à la quatrième entrée du régulateur, alimente la base d'un transistor en montage Darlington alors que l'autre reliée a la première entrée du régulateur assure une polarisation auxiliaire du transistor Darlington afin de le saturer au démarrage de l'alternateur.

La base du transistor peut être polarisée par une résistance reliée à la quatrième entrée du régulateur, de sorte que le transistor se sature et bloque le transistor Darlington si la première entrée du régulateur est déconnectée de la borne positive de l'alternateur.

Le comparateur de surintensité peut être un comparateur à sortie collecteur ouvert, qui courtcircuite la tension de référence des deux comparateurs des circuits de détection de tension lorsque l'intensité du courant traversant le transistor en montage Darlington développe, aux bornes du shunt de mesure, une tension supérieure à celle donnée par un pont résistif constitué, en premier lieu, d'une résistance branchée entre une borne du comparateur de surintensité et la masse et, en second lieu, d'une résistance branchée entre cette même borne et la quatrième entrée du régulateur.

Ces caractéristiques propres à l'invention ont pour avantage que la polarisation ainsi réalisée de la base du montage Darlington qui commande le courant d'excitation d'obtenir l'amorçage de l'alternateur pour une très faible vitesse de rotation de son rotor. De plus, l'utilisation de circuits à très fort gain et forte impédance d'entrée permet d'obtenir facilement, avec des condensateurs de faible valeur une tension continue qui est l'image de la tension moyenne à la borne auxiliaire et à la borne (+) de l'alternateur, ce qui permet d'avoir une bonne régulation de la tension. Enfin, la mesure de la tension sur la borne (+) de l'alternateur permet de supprimer tous les problèmes de mesure poses par les chutes de tension qui sont dues aux diodes dans le cas ou la prise de mesure s'effectue sur la borne auxiliaire, ce qui permet également d'avoir une meilleure regulation.

L'invention sera mieux comprise à l'aide de la description detaillée qui suit, donnée avec references aux dessins ci-annexés relatifs à un mode de réalisation particulier mais qui ne sont nullement limitatifs.

- la figure 0 de ces dessins est un schéma donnant l'allure des signaux aux bornes d'un alternateur dans le cas de délestages, ce schema ayant été commenté precedemment;

- la figure 1 est un schéma de câblage d'un régulateur selon l'invention avec un alternateur et un circuit électrique de véhicule;

- la figure 2 est un schéma de principe du régulateur selon l'invention;

- la figure 3 enfin représente le circuit électronique d'un exemple de realisation du régulateur des figures 1 et 2.

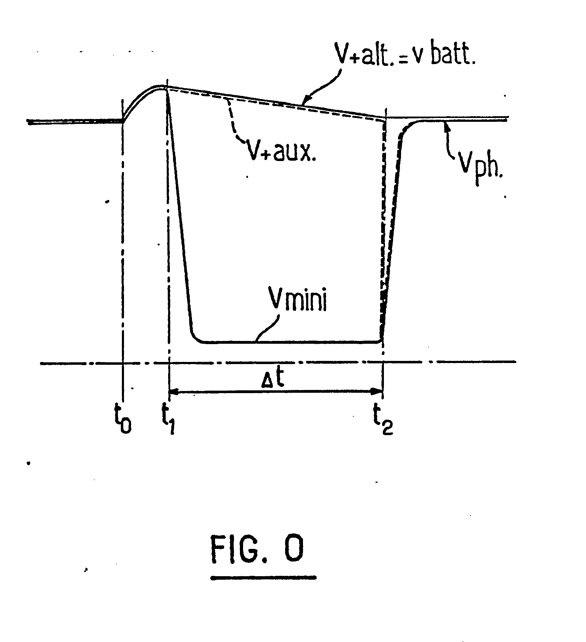

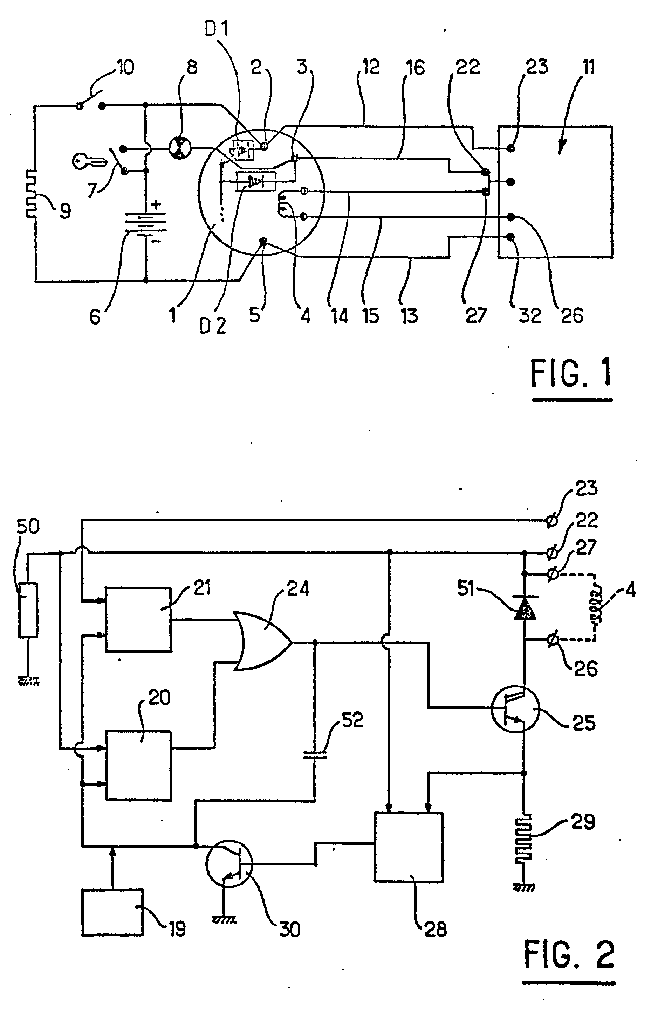

Sur la figure 1, l'alternateur 28 V pour poids-lourds et ses ponts de diodes principal D1 et auxiliaire D2, tres schématiquement représentés, ont été désignés dans leur ensemble par la référence 1, et présentent une borne (+) (ou positive) 2, une borne auxiliaire 3, une bobine excitatrice 4 et une borne (-) (ou negative) 5 reliée à la masse et à la borne (-) d'une batterie 6 de 24 V, dont la borne (+) est reliée à la borne (+) 2 de l'alternateur 1. Un contacteur 7 d'allumage, qui peut être fermé par la clé de contact du véhicule, est relié par l'une de ses bornes au (+) de la batterie 6 et par son autre borne à la borne auxiliaire 3 de l'alternateur 1 par l'intermédiaire d'une lampe témoin 8 (24 V, 3 W). Enfin, tous les autres organes du circuit électrique du véhicule, qui consomment de l'énergie électrique et sont alimentés par la batterie 6 ou par l'alternateur 1, ont été schématisés par la charge 9 mise en circuit ou hors circuit par un interrupteur 10.

Le régulateur 11, destiné à réguler la tension délivrée par l'alternateur 1 à une valeur de 28 V comporte cinq bornes permettant son raccordement à l'alternateur 1.

La première borne, qui constitue une entrée 23 de mesure de tension à faible consommation, sur laquelle s'effectue la régulation à 28 V, est raccordée à la borne (+) 2 par le conducteur 12; la seconde entrée 32 est raccordée à la borne (-) 5 par le conducteur 13; les troisième et quatrième entrées 26 et 27 sont raccordées par les conducteurs 14 et 15 aux bornes de la bobine excitatrice 4, afin d'alimenter cette dernière; la cinquième borne est reliée directement à la quatrième entrée 27 et constitue une entrée 22 à fort courant raccordée a la borne auxiliaire 3 par le conducteur 16.

Comme represente sur la figure 2, le régulateur 11 comprend un générateur de tension de référence 19, qui est relié en parallèle à une entrée de chacun de deux circuits de détection 20 et 21. Une seconde entrée du circuit de détection 20 est reliée à l'entrée 22 du régulateur, raccordée à la borne auxiliaire 3 et une seconde entrée du circuit 21 est reliè à la première entrée 23 du régulateur, raccordée à la borne 2. Le circuit 21 assure la comparaison de la tension mesurée sur la borne 2 à une première tension de régulation de 28 V, et ne délivre un signal, par sa sortie à l'état haut, sur la porte logique OU 24, que si la tension mesurée est inférieure à la première tension de régulation de 28 V. De manière analogue, le circuit 20 assure la comparaison de la tension détectée sur la borne auxiliaire 3 à une seconde tension de régulation, inférieure à la première, et par exemple égale à 27 V, et ne délivre un signal, par sa sortie à l'état haut, sur la porte logique OU 24, que si cette tension détecté est inférieure à la seconde tension de régulation de 27 V.

La sortie de la porte OU 24 est reliée à la base d'un transistor Darlington 25; le collecteur du transistor 25 est relié aux troisième et quatrieme entrées 26 et 27 d'alimentation de la bobine excitatrice 4, entre lesquelles est branchée une diode 51, et à l'entrée 22; l'émetteur du transistor 25 est relié à un circuit de détection de surintensité, comprenant un comparateur 28 et un shunt de mesure 29, l'autre borne du shunt 29 étant à la masse. Le comparateur 28 est également relié par une borne à l'entrée 22; il compare l'intensité du courant, qui traverse le Darlington 25, au seuil d'intensité correspondant au rapport de la tension détectée sur la borne auxiliaire 3 à la résistance minimum de la bobine excitatrice 4. La sortie du comparateur 28 alimente la base d'un transistor 30, dont l'émetteur est à la masse et le collecteur, d'une part, relié à la sortie de la porte OU 24 par un condensateur 52, et, d'autre part, relié à la sortie du générateur de tension de référence 19.

Dans le régulateur ainsi constitué, afin de maintenir le signal de phase à partir de l'instant où la surtension réelle, occasionnée par l'ouverture de l'interrupteur 10, passe par son maximum, on utilise une information de baisse de tension de phase, qui est donnée sur la borne auxiliaire 3 de l'alternateur 1 grâce à un dispositif suiveur de tension; ce dispositif suiveur est constitué par une simple résistance 50 (de 150 Ω par exemple) qui est branchée entre les bornes 27 et 32 du régulateur et qui fait baisser la tension détectée sur la borne auxiliaire 3 lorsque la valeur de crête de la tension alternative de phase lui est inférieure.

La régulation de la tension détectée à la borne auxiliaire 3 sur la seconde tension de régulation (27 V), de valeur légèrement inférieure à celle de la première (28 V) est assurée par le circuit de détection 20; ceci permet donc de rendre conducteur le régulateur 11 lorsque la valeur de crête du signal de phase est inférieure à la seconde tension de régulation (27 V). Le signal de phase est donc toujours présent et un compte-tours branché sur la phase n'accusera pas de creux dans l'affichage qu'il donne du régime de rotation. De plus, la différence de potentiel aux bornes de la lampe-témoin 8 ne dépasse pas la différence entre la surtension maximale (32 V) et la seconde valeur de régulation (27 V), soit dans cet exemple une différence de 5 V, ce qui est insuffisant pour que cette lampe-témoin s'allume.

En fonctionnement normal du régulateur, la tension sur la borne auxiliaire 3 est égale à 28 V. En conséquence, la sortie du circuit de détection 20, qui compare cette tension détectée à la seconde valeur de régulation (27 V) est à l'état bas, et la base du Darlington 25 n'est alimentée par la porte logique OU 24 que si la sortie du circuit de détection 21 est à l'état haut, c'est-à-dire si la tension mesurée sur la borne (+) 2 de l'alternateur est inférieur à 28 V. Dans ces conditions, il se produit une régulation de la tension de sortie et de l'alternateur au niveau de 28 V.

Dès l'apparition d'un délestage, la tension mesurée sur la borne (+) 2 est supérieure à la première valeur de régulation (28 V). Il en résulte que la sortie du circuit de détection 21 est alors au niveau bas, et que la base du Darlington 25 n'est plus alimentée. Ce Darlington est alors bloqué jusqu'au moment où la tension détectée sur la borne auxiliaire 3 devient inférieure à la seconde valeur de régulation (27 V). A cet instant, la sortie du circuit 20 passe à l'état haut, de sorte que la porte logique OU 24 alimente la base du Darlington 25, et la tension détectée sur la borne auxiliaire 3 est régulée au niveau de 27 V.

Lors d'un court-circuit d'excitation, alors que le Darlington 25 est à l'état conducteur le courant qui traverse ce montage 25 a une intensité élevée qui depend du gain en intensité du Darlington 25. Afin d'éviter de le detruire, il est impératif de reduire alors rapidement le temps de maintien à l'état conducteur. Ceci est assuré grâce au circuit de détection de surintensité constitué par le shunt de mesure 29 et le comparateur de surintensité 28. Dès que l'intensité détectée à la sortie du Darlington 25 est supérieure au seuil d'intensité (correspondant au rapport de la tension detectée sur la borne auxiliaire 3 à la résistance minimum de la bobine d'excitation 4), la sortie du comparateur de surintensité 28 vient alimenter la base du transistor 30, qui passe à l'état conducteur et qui vient diminuer les tensions de régulation des deux circuits de détection 20 et 21, de sorte que la tension mesurée sur la borne 2 et la tension détectée sur la borne auxiliaire 3 deviennent respectivement supérieures à la tension de régulation correspondante, ce qui a pour conséquence que les sorties des circuits de détection 20 et 21 sont à l'état bas, et que le Darlington 25 est ainsi bloqué à l'état non conducteur.

Dans ces conditions, ce Darlington 25 bascule alternativement de l'état conducteur à l'état non conducteur à une fréquence plus élevée, qui est déterminée par les constantes de temps des circuits d'entrée des circuits de détection 20 et 21 ainsi que par le condensateur 52, qui réalise une réaction positive renforçant le blocage à l'état non conducteur et la saturation à l'état conducteur du Darlington 25.

On constate que l'utilisation de la tension détectée sur la borne auxiliaire 3, afin de déterminer le seuil d'intensité auquel est sensible le comparateur 28, permet de faire diminuer l'amplitude des pointes de courant, courtes mais repétitives, qui traversent le montage Darlington 25. En effet, comme l'excitation est court-circuitée, l'alternateur 1 ne delivre plus de courant, de sorte que la tension sur la borne auxiliaire 3 diminue et donc également le seuil d'intensité du circuit de détection de court-circuit. Ceci permet donc d'éviter un échauffement trop important du Darlington 25.

Un autre avantage de ce type de protection contre les courts-circuits est que le montage Darlington 25 ne se trouve jamais bloqué de façon définitive. Dès la disparition d'un court-circuit, la bobine excitatrice 4 est traversée par un petit courant, qui est suffisant pour réamorcer l'alternateur 1.

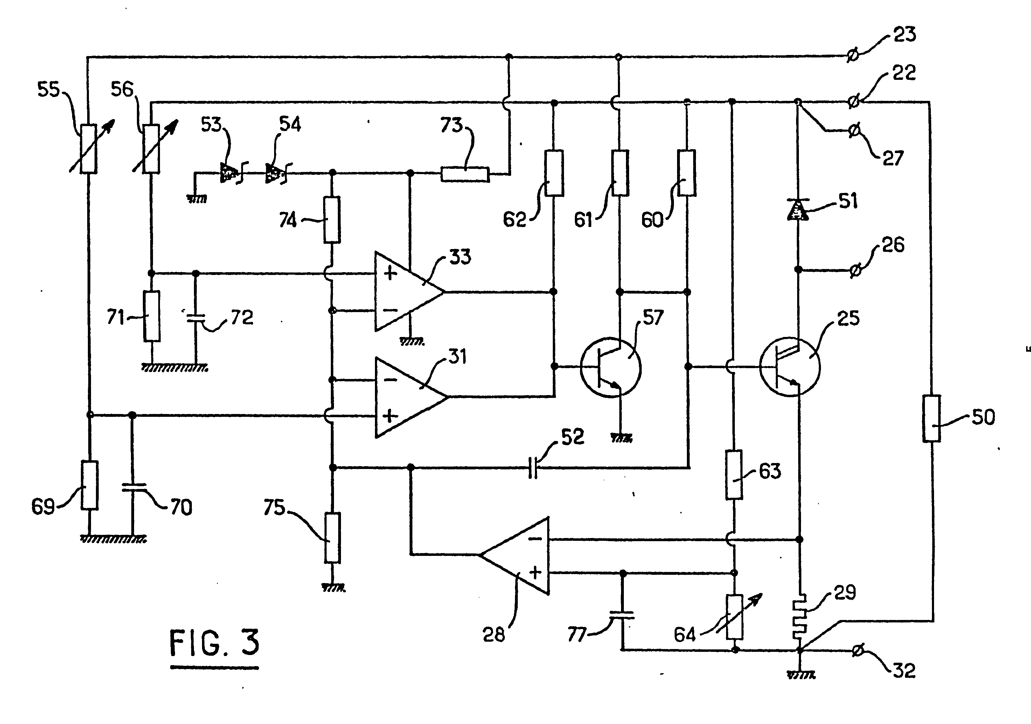

Sur la figure 3, on retrouve de manière plus détaillée la réalisation des différents sous-ensembles représentés sur la figure 2. Les différents composants identiques ou analogues des figures 2 et 3 sont repérés par les mêmes références.

Le circuit de détection 21, qui compare la tension mesurée sur la borne (+) 2 à la tension de régulation de 28 V est constitué par le comparateur 31, dont l'entrée positive est reliée à l'entrée 23 du régulateur par l'intermédiaire d'un filtre de la tension mesurée. Ce filtre comprend la résistance 55 réglable, ainsi qu'un montage en parallèle d'une résistance 69 et d'un condensateur 70 reliés à la masse. De même, le circuit de détection 20, qui compare la tension détectée sur la borne auxiliaire 3 à la seconde tension de régulation de 27 V est constituée par le comparateur 33, dont l'entrée positive est reliée à la borne 22 du régulateur par un filtre comprenant la résistance 56 réglable ainsi qu'un montage en parallèle d'une résistance 71 et d'un condensateur 72 reliés à la masse.

Le générateur de tension de référence 19 de la figure 2 est constitué par deux diodes Zener 53 et 54 branchées entre la masse et l'entrée 23 du régulateur, avec interposition d'une résistance 73, et reliées avec interposition d'une résistance 74 aux entrées negatives des comparateurs 31 et 33 maintenues à un potentiel positif par rapport à la masse par la résistance 75. La différence de 1 V entre les deux tensions de régulation de 27 V et 28 V est déterminée par l'écart entre les valeurs de réglage des deux résistances réglables 55 et 56, et on note que les diodes Zener 53 et 54 assurent également la compensation thermique du régulateur.

La fonction de la porte logique "OU" 24 de la figure 2 est, sur la figure 3, simplement réalisée par l'utilisation de comparateurs 31 et 33 à sortie collecteur ouvert branchés en parallèle et d'un transistor 57 destiné à la mise en phase de l'amplification du courant. La base de ce transistor 57, reliée aux sorties des comparateurs 31 et 33, est polarisée par une résistance 62 reliée à l'entrée 22 du régulateur, et le collecteur du transistor 57 est alimente par deux résistances 61 et 60 branchées respectivement à partir des entrées 23 et 22 du régulateur. De plus, la résistance 60 délivre à la base du montage Darlington 25 le courant nécessaire au fonctionnement de ce dernier, tandis que la résistance 61 sert de polarisation auxiliaire à ce même Darlington 25, afin de permettre de bien saturer ce dernier lors du démarrage de l'alternateur, alors que la tension détectée sur la borne auxiliaire 3, et donc sur la borne 22 du regulateur, est voisine de 0.

On constate que, si le fil de prise de mesure, qui relie l'entrée 23 du régulateur à la borne ( + ) 2 de l'alternateur 1 se déconnecte, l'alimentation des diodes Zener 53 et 54 ainsi que celle des comparateurs 31 et 33 n'est plus assurée. De ce fait, les transistors des étages de sortie des comparateurs 30 et 31 sont bloqués, et la base du transistor 57, alimentée à partir de l'entrée 22 au travers de la résistance 62 sature ce transistor 57 à l'état conducteur, ce qui bloque le Darlington 25 et protège ainsi l'ensemble du régulateur. En effet, si le Darlington 25 reste saturé, la bobine excitatrice 4 de l'alternateur est traversée par un courant de très forte intensité, ce qui, pour une vitesse élevée, donne une tension de sortie très elevée sur les bornes 2 et 3, et donc également sur les entrées 23 et 22 du régulateur, laquelle peut atteindre 250 V si la batterie 6 et la charge 9 sont debranchées.

Un circuit de détection de surintensité d'excitation est constitué par le comparateur 28 à sortie collecteur ouvert, dont la sortie vient court-circuiter la tension de référence des comparateurs 31 et 33, lorsque le courant traversant le Darlington 25 a une intensité telle qu'il développe aux bornes du shunt de mesure 29 une tension supérieure à celle qui est donnée parle pont résistif constitué par des résistances 63 et 64 branchées la première entre l'entrée positive du comparateur 28 et l'entrée 22 du regulateur et la seconde entre cette même entrée positive du comparateur 28 et la masse. De plus, le condensateur 77 filtre les parasites résiduels au niveau des entrées du comparateur 28. Le régulateur est mis à la masse par son entrée 32, reliée à la borne 5 de l'alternateur 1.

En plus des avantages précédemment mentionnés, le regulateur selon l'invention, lorsqu'il est raccordé à un alternateur et à un circuit électrique comme cela est représenté sur la figure 1, permet la visualisation d'un certain nombre de défaillances par l'allumage de la lampe-témoin 8. Lorsque cette dernière est allumée de manière intense, sous une tension qui est celle disponible aux bornes de la batterie 6, cela signifie que l'alternateur est arrêté, que la courroie d'entraînement de ce dernier est cassée, ou que la bobine excitatrice 4 ou les bagues d'alimentation sont court-circuitées. Par contre, lorsque la lampe 8 ne s'allume que faiblement, sous une tension qui est de l'ordre de la moitié de celle disponible aux bornes de la batterie 6, cela signifie que l'un au moins des conducteurs à raccordement 12, 13, 14, 15 et 16 est rongé ou déconnecté, ou encore que la bobine excitatrice 4 ou les charbons conducteurs des bagues d'alimentation sont coupés.

## Revendications

1. Régulateur de la tension délivrée par un alternateur (1) à une bobine excitatrice (4), ledit alternateur comportant, d'une part un redresseur principal, qui est alimenté par les bobines d'induit et est raccordé aux bornes principales positive. (2) et negative (5) de l'alternateur, d'autre part un redresseur auxiliaire, qui est alimenté par les bobines d'induit et est raccordé à la borne negative (5) precitée et a une borne auxiliaire (3), ledit régulateur étant raccordé, d'une part aux bornes principales de l'alternateur (2, 5) respectivement par une première (23) et une seconde (32) entrée, d'autre part à la bobine excitatrice par une troisième (26) et quatrième (27) entrée et enfin à la borne auxuliaire (3) par une entrée (22) directement reliée à la quatrième (27) entrée precitée, ce régulateur comprenant:
- un générateur de tension de référence (19), délivrant une première tension de régulation,

- un premier circuit de détection (21), qui compare à la première tension de régulation la tension mesurée entre, d'une part la borne positive principale (2), d'autre part la borne négative (5),

- un générateur de tension de référence (19) qui délivre une seconde tension de régulation,

- un dispositif suiveur de tension (50), grâce auquel la tension sur la borne auxiliaire (3) suit la valeur crête de la tension alternative de la phase de l'alternateur,

- un second circuit de détection de tension (20) comparant la tension détectée sur la borne auxiliaire (3) à la seconde tension de régulation,

- un commutateur à transistor (25), commandant l'alimentation de la bobine excitatrice (4),

- un circuit logique (24) ayant pour entrées les sorties des deux circuits de détection de tension (20, 21) et commandant les états conducteurs et non conducteurs du commutateur (25),

ledit régulateur étant caractérisé par le fait qu'il alimente la bobine excitatrice (4), si au moins l'une des deux tensions mesurées est inférieure à sa tension de régulation respective et que la bobine (4) est désexcitée, dans le cas ou les deux tensions mesurées sont supérieures a leurs tensions de régulations respectives et en ce que la seconde tension de régulation est légèrement inférieure à la première.

2. Régulateur selon la revendication 1, comprenant un circuit de détection de surintensité (28) qui mesure l'intensité du courant traversant la bobine excitatrice (4), lorsque le commutateur (25) conduit, et la compare à un seuil d'intensité, afin de commander, des que l'intensité mesurée est supérieure au seuil d'intensité, une diminution des première et seconde tensions de régulation, de sorte que le commutateur (25) passe à l'état non conducteur, caractérisé par le fait que le circuit de détection de surintensité est relié à la quatrième entrée (22) raccordée directement à la borne auxiliaire (3) et detérmine le seuil d'intensité par le rapport de la tension détectée sur la borne auxiliaire (3) à la résistance minimum de la bobine excitatrice (4).

3. Régulateur selon la revendication 1 ou 2, caractérisé par le fait que les circuits de détection (20, 21) comprennent deux comparateurs (31, 33) à sortie collecteur ouvert et qui sont branchés en parallèle sur la base d'un transistor (57), le collecteur dudit transistor (57) étant alimenté par deux résistances (60, 61), dont l'une (60), reliée à la quatrième entrée (22, 27) du régulateur, alimente la base d'un transistor en montage Darlington (25), alors que l'autre (61) reliée à la première entrée (23) du régulateur, assure une polarisation auxiliaire du transistor Darlington (25) afin de le saturer au démarrage de l'alternateur (1).

4. Régulateur selon la revendication 3 caractérisé par le fait que la base du transistor (57) est polarisée par une résistance (62) reliée à la quatrième entrée (22, 27) du régulateur, de sorte que le transistor (57) se sature et bloque le transistor Darlington (25) si la première entrée (23) du régulateur est deconnectée de la borne positive (2) de l'alternateur (1).

5. Régulateur selon la revendication 3 ou 4 dans la mesure où elles sont dépendantes de la revendication 2, caractérisé par le fait que le comparateur de surintensité (28) est un comparateur à sortie collecteur ouvert, qui courtcircuite la tension de référence des deux comparateurs (31, 33) des circuits de détection de tension lorsque l'intensité du courant traversant le transistor en montage Darlington (25) développe aux bornes du shunt de mesure (29), une tension supérieure à celle donnée par un pont résistif (63, 64) constitué, en premier lieu, d'une résistance (64) branchée entre une borne du comparateur de surintensité (28) et la masse (32) et, en second lieu, d'une résistance (63) branchée entre cette même borne et la quatrième entrée (22, 27) du régulateur.

6. Régulateur selon l'une quelconque des revendications 3 à 5 caractérisé par le fait qu'un condensateur (52) est monté entre la sortie de commande du comparateur de surintensité (28) et la base du transistor (25).

**Patentansprüche**

1. Regler für die von einen Wechselstromgenerator (1) an eine Erregerspule gelieferte Spannung, wobei der Wechselstromgenerator (1) einerseits einen Hauptgleichrichter, der durch die Induktionsspulen gespeist wird und mit der positiven (2) und der negativen (5) Klemme des Wechselstromgenerators verbunden ist, und andererseits einen Hilfsgleichrichter aufweist, der durch die Induktionsspulen gespeist wird und mit der negativen Klemme (5) des Wechselstromgenerators (1) und mit einer Hilfsklemme (3) verbunden ist, und der Regler einerseits jeweils über einen ersten (23) und einen zweiten (32) Eingang an die Hauptklemmen (2, 5) des Wechselstromgenerators und andererseits über einen dritten (26) und einen vierten (27) Eingang an die Erregerspule angeschlossen ist und schließlich über einen direkt mit dem vierten Eingang (27) verbundenen Eingang (22) an die Hilfsklemme (3) angeschlossen ist, und wobei der Regler die folgenden Komponenten aufweist:

- einen Referenzspannungsgenerator (19), der eine erste Regelspannung liefert,

- eine erste Detektionsschaltung (21), die die zwischen der positiven (2) und der negativen (5) Klemme gemessene Spannung mit der ersten Regelspannung vergleicht,

- einen Referenzspannungsgeneratot (19), der eine zweite Regelspannung liefert,

- eine Spannungsnachführvorrichtung (50), durch die die Spannung an der Hilfsklemme (3) dem Spitzenwert der Phasenwechselspannung des Wechselstromgenerators folgt,

- eine zweite Spannungsdetektionsschaltung (20), die die an der Hilfsklemme (3) detektierte Spannung mit der zweiten Referenzspannung vergleicht,
- einen Transistorschalter (25), der die Speisung der Erregerspule (4) steuert,
- eine Logikschaltung (24) deren Eingangssignale die Ausgangssignale der beiden Spannungsdetektionsschaltungen (20, 21) sind und die den leitenden und den nicht-leitenden Zustand des Schalters (25) steuert,

dadurch gekennzeichnet,

daß der Regler die Erregerspule (4) speist, wenn wenigstens eine der beiden gemessenen Spannungen jeweils kleiner als seine Regelspannung ist, und daß die Spule (4) aberregt ist, wenn die beiden gemessenen Spannungen größer als ihre jeweiligen Regelspannungen sind, und daß die zweite Regelspannung geringfügig kleiner als die erste ist.

2. Regler nach Anspruch 1, mit einer Überstromdetektionsschaltung (28), die bei leitendem Schalter (25) die Stärke des durch die Erregerspule (4) fließenden Stromes mißt und diesen mit einem Schwellenwert vergleicht, um, sobald die gemessene Stromstärke größer als der Schwellenwert ist, eine Verringerung der ersten und der zweiten Regelspannung zu bewirken, derart, daß der Schalter (25) in den nicht-leitenden Zustand übergeht,

dadurch gekennzeichnet,

daß die Überstromdetektionsschaltung mit dem direkt an der Hilfsklemme (3) angeschlossenen vierten Eingang (22) verbunden ist und den Schwellenwert durch das Verhältnis der an der Hilfsklemme (3) auftretenden Spannung zu dem Mindestwiderstand der Erregerspule (4) ermittelt.

3. Regler nach Anspruch 1 oder 2, dadurch gekennzeichnet, daß die Detektionsschaltungen (20, 21) zwei Komparatoren (31, 33) mit offenem Kollektorausgang aufweisen, die parallel geschaltet an der Basis eines Transistors (57) liegen, dessen Kollektor von zwei Widerständen (60, 61) gespeist wird, wobei der mit dem vierten Eingang (22, 27) des Reglers verbundene eine Widerstand (60) die Basis eines Darlington-Transistors (25) speist, während der mit dem ersten Eingang (23) des Reglers verbundene andere Widerstand (61) eine Hilfsversorgungsspannung für den Darlington-Transistor liefert, damit dieser beim Anlaufen des Wechselstromgenerators (1) gesättigt ist.

4. Regler nach Anspruch 3, dadurch gekennzeichnet, daß die Basis des Transistors (57) durch einen mit dem vierten Eingang (22, 27) des Reglers verbundenen Widerstand (62) mit einer solchen Vorspannung versehen ist, daß sich der Transistor (57) in der Sättigung befindet und den Darlington-Transistor (25) sperrt, wenn der erste Eingang (23) des Reglers von der positiven Klemme (2) des Wechselstromgenerators (1) abgetrennt ist.

5. Regler nach Anspruch 3 oder 4, sofern diese von dem Anspruch 2 abhängig sind, dadurch gekennzeichnet, daß der Überstromkomparator (28) ein Komparator mit offenem Kollektorausgang ist, der die Referenzspannung der beiden Komparatoren (31, 33) der Spannungserkennungsschaltungen kurzschließt, wenn die Stärke des durch den Darlington-Transistor (25) fließenden Stromes an den Klemmen eines Nebenschlußmeßwiderstandes (29) eine Spannung erzeugt, die größer ist als diejenige Spannung, die von einer Widerstandsbrücke (63, 64) abgegeben wird, welche an erster Stelle einen zwischen einer Klemme des Überstromkomparators (28) und Masse (32) geschalteten Widerstand (64) und an zweiter Stelle einen zwischen derselben Klemme und dem vierten Eingang (22, 27) des Reglers geschalteten Widerstand (63) aufweist.

6. Regler nach einem der Ansprüche 3 bis 5, dadurch gekennzeichnet, daß zwischen dem Steuerausgang des Überstromkomparators (28) und der Basis des Transistors (25) ein Kondensator (52) angeordnet ist.

## Claims

1. A regulator for the voltage delivered by an alternator (1) having an exciter coil (4), said alternator comprising on the one hand a main rectifier which is fed by the induced windings and is connected to the main positive (2) and negative (5) terminals of the alternator, and on the other hand an auxiliary rectifier which is fed by the induced windings and is connected to the said negative terminal (5) and to an auxiliary terminal (3), said regulator being connected on the one hand to the main terminals of the alternator (2, 5) respectively by a first (23) and a second (32) input, and on the other hand to the exciter coil by a third (26) and fourth (27) input and finally to the auxiliary terminal (3) by an input (22) directly connected to the said fourth input (27), this regulator comprising:
- a reference voltage generator (19) delivering a first regulation voltage,
- a first detection circuit (21) which compares with the first regulation voltage the voltage measured between, on the one hand the positive terminal (2), and on the other hand the negative terminal (5),
- a reference voltage generator (19) which delivers a second regulation voltage,
- a voltage follower device (50) by virtue of which the voltage on the auxiliary terminal (3) follows the crest value of the alternating voltage of the phase of the alternator,
- a second voltage detection circuit (20) comparing the voltage detected on the auxiliary terminal (3) with the second regulation voltage,
- a transistor switch (25) controlling the feed to the exciter coil (4),
- a logic circuit (24) having as inlets the outlets of the two voltage detection circuits (20, 21) and controlling the conductive and non-conductive states of the switch (25),

said regulator being characterised by the fact that it feeds the exciter coil (4), if at least one of the two measured voltages is less than the respective regulation voltage, in that the coil (4) is de-energised in the case where the two measured voltages are greater than their respective regulation voltages and in that the second regulation voltage is slightly less than the first.

2. A regulator according to claim 1, comprising an overcurrent detection circuit (28) which measures the intensity of current through the exciter coil (4) when the switch (25) conducts and compares it with an intensity threshold in order to control, when the measured intensity is greater than the threshold intensity, a reduction in the first and second regulation voltages such that the switch (25) passes to the non-conductive state, characterised by the fact that the overcurrent detection circuit is connected to the fourth inlet (22) directly connected to the auxiliary terminal (3) and determines the threshold intensity by the relationship of the voltage detected on the auxiliary terminal (3) to the minimum resistance of the exciter coil (4)

3. A regulator according to claim 1 or 2, characterised by the fact that the detection circuits (20, 21) comprise two comparators (31, 33) having an open collector output and which are connected in parallel to the base of a transistor (57), the collector of said transistor (57) being fed by two resistances (60, 61) of which one (60) connected to the fourth inlet (22, 27) of the regulator feeds the base of a Darlington-mounted transistor (25) whereas the other (61) connected to the first inlet (23) of the regulator ensures auxiliary polarisation of the Darlington transistor (25) in order to saturate it for starting the alternator (1).

4. A regulator according to claim 3, characterised by the fact that the base of the transistor (57) is polarised by a resistance (62) connected to the fourth inlet (22, 27) of the regulator so that the transistor (57) saturates and blocks the Darlington transistor (25) if the first inlet (23) of the regulator is disconnected from the positive terminal (2) of the alternator (1).

5. A regulator according to claim 3 or claim 4, when appendant to claim 2, characterised by the fact that the overcurrent comparator (28) is an open collector outlet comparator which short-circuits the reference voltage of the two comparators (31, 33) of the voltage detection circuits when the intensity of current through the Darlington-mounted transistor (25) develops at the terminals of the measuring shunt (29) a voltage greater than that given by the resistor bridge (63, 64) constituted firstly by a resistance (64) connected between a terminal of the overcurrent comparator (28) and earth (32) and secondly a resistance (63) connected between said same terminal and the fourth input (22, 27) of the regulator.

6. A regulator according to any one of claims 3 to 5 characterised by the fact that a condenser (52) is mounted between the control outlet of the overcurrent comparator (28) and the base of the transistor (25).

FIG. 0

FIG. 1

FIG. 2

0 116 482

3

FIG. 3